# EUROPÄISCHE PATENTSCHRIFT

(11) **EP 1 940 577 B1**
(45) Veröffentlichungstag und Bekanntmachung des Hinweises auf die Patenterteilung: **17.07.2013**
(21) Anmeldenummer: 06793781.3
(22) Anmeldetag: 25.09.2006
(51) Int. Cl.: B23H 9/00, F02M 61/16

(54) **VERFAHREN UND VORRICHTUNG ZUR BEARBEITUNG EINES DÜSENKÖRPERS FÜR EIN KRAFTSTOFFEINSPRITZVENTIL**
METHOD AND DEVICE FOR TREATING A NOZZLE BODY FOR A FUEL INJECTION VALVE
PROCEDE ET DISPOSITIF D'USINAGE D'UN CORPS D'INJECTEUR D'UNE SOUPAPE D'INJECTION DE CARBURANT

(30) Priorität: 17.10.2005 DE 102005049534
(43) Veröffentlichungstag der Anmeldung: 09.07.2008
(73) Patentinhaber: ROBERT BOSCH GMBH, 70442 Stuttgart (DE)
(72) Erfinder: KERN, Rudi, 70469 Stuttgart (DE); FRANZ, Daniel, 70195 Stuttgart (DE); BOEHNLEIN, Josef, 97478 Knetzgau (DE)
(86) Internationale Anmeldenummer: PCT/EP2006/066671
(87) Internationale Veröffentlichungsnummer: WO 2007/045543

(56) Entgegenhaltungen:
- EP-A- 0 425 236
- EP-A- 0 989 298
- DE-A1- 10 224 241
- DE-A1- 10 256 590
- US-A- 6 110 350

## Beschreibung

Die vorliegende Erfindung betrifft ein Verfahren sowie eine Vorrichtung zur Bearbeitung eines Düsenkörpers für ein Kraftstoffeinspritzventil mit einer Zulaufbohrung für Kraftstoff, die in eine Führungsbohrung für eine Düsennadel einmündet, wobei der spanend bearbeitete Düsenkörper durch Nitrieren gehärtet wird. Ferner betrifft die Erfindung auch ein entsprechend bearbeitetes Kraftstoffeinspritzventil selbst.

Ein derartiges Verfahren und ein derartiges Krafftstoffeinspritzventil sind aus DE10256590 bekannt. Eine derartige Vorrichtung ist aus EP0989298 bekannt.

DE10256590 offenbart im Zusammenhang alle Merkmale des Oberbegriffs der Ansprüche 1 und 8. EP0989298 offenbart im Ziusammenhang alle Merkmale des Oberbegriffs des Anspruchs 5.

Auf dem Gebiet der Verbrennungsmotorentechnik werden Kraftstoffeinspritzventile zum dosierten Einspritzen des zu verbrennenden Kraftstoffes verwendet. Kraftstoffeinspritzventile bilden das letzte Glied in einer Kraftstoffförderkette und damit die Schnittstelle zum Brennraum. Aufgabe des Kraftstoffeinspritzventils ist es, durch eine Zerstäubung des Kraftstoffes eine gezielte Durchmischung von Kraftstoff und Luft in einem bestimmten räumlichen Bereich des Brennraums oder davor zu erzielen. Abhängig vom gewünschten Betriebszustand und dem verwendeten Kraftstoff- insbesondere Diesel - wird der Kraftstoff im Bereich um die Zündkerze konzentriert oder gleichmäßig im gesamten Brennraum zerstäubt. Ein Kraftstoffeinspritzventil wird über einen elektrischen Anschluss nach Maßgabe der Motorsteuerung elektronisch angesteuert. Eine mit dem elektrischen Anschluss in Verbindung stehende elektrische Spule dient der Erzeugung eines Magnetfeldes zum Betätigen des Kraftstoffeinspritzventils. Hierbei hebt eine Ventilnadel gegen einen Federdruck vom Ventilsitz ab und gibt eine Ventilauslassbohrung frei. Aufgrund der Druckdifferenz zwischen dem Druck in der Kraftstoffzuführung und dem Brennraumdruck wird nun der Kraftstoff in den Brennraum gedrückt. Beim Abschalten des Spulenstroms wird die Düsennadel aufgrund der Federkraft wieder in den Ventilsitz gepresst und unterbricht somit den Kraftstofffluss. Die eingespritzte Kraftstoffmenge ist bei gegebenem Öffnungsquerschnitt abhängig vom Druck in der Kraftstoffzuführung, vom Gegendruck im Brennraum sowie Öffnungszeit und Öffnungsquerschnitt des Kraftstoffeinspritzventils.

Der Trend in der Technik geht besonders bei einer Direkteinspritzung in den Brennraum zu immer höheren Einspritzdrücken. Denn es hat sich gezeigt, dass ein hoher Einspritzdruck sowohl eine Reduzierung der Emission als auch eine Steigerung der spezifischen Leistung erlaubt. Derzeit sind Einspritzdrücke von bis zu 3000 bar darstellbar. Immer höhere Einspritzdrücke verursachen jedoch bei den Bauteilen eines Kraftstoffeinspritzventils entsprechend hohe Materialbeanspruchungen, worauf bei der Konzeption von Kraftstoffeinspritzventilen für den Hochdruckbereich zu achten ist. Insbesondere die erforderliche Druckschwellenfestigkeit ist konstruktiv sicherzustellen.

Aus der DE 102 24 241 A1 geht ein Kraftstoffeinspritzventil hervor, das im Wesentlichen aus einem Haltekörper mit koaxial stirnseitig hieran befestigtem Düsenkörper besteht. Der Düsenkörper ist am Halterkörper über eine Spannmutter verschraubt und weist eine koaxiale Führungsbohrung für eine Düsennadel auf, deren distales Ende einen endseitig des Düsenkörpers angeordneten Ventilsitz zum Zuführen von Kraftstoff in den Brennraum betätigt. Die Betätigung der Düsennadel erfolgt dabei in an sich bekannter Weise. Zur Zuführung von Kraftstoff zum Ventilsitz des Düsenkörpers weist der Düsenkörper eine benachbart zur Führungsbohrung verlaufende Zulaufbohrung auf, welche in eine die Führungsbohrung partielle erweiternde Druckkammer mündet. Von hier aus gelangt der Kraftstoff über einen Spalt zwischen Führungsbohrung und Düsennadel bis an den Ventilsitz. Jenseits des Ventilsitzes weist der Düsenkörpers stirnseitige Spritzlöcher auf, über welche der Kraftstoff zerstäubt wird.

Wie allgemein bekannt ist, werden Düsenkörpers für Kraftstoffeinspritzventile im Hochdruckbereich auf besondere Weise vergütet, um die erforderliche Druckschwellenfestigkeit sicherzustellen. Gewöhnlich werden Düsenkörper zur Verbesserung der Warmhärte durch Nitrieren behandelt. Allerdings bildet sich durch das Nitrieren an der Oberfläche des Düsenkörpers eine recht spröde Verbindungsschicht. Versuche haben ergeben, dass diese Verbindungsschicht bei extremen Belastungen auch abplatzen kann und somit eine verstärkte Kerbwirkung im Material des Düsenkörpers hervorruft, welche wiederum zu einer weitergehenden Schädigung des Düsenkörpers aufgrund der Beanspruchungen im Betrieb führen kann. Aus dieser Situation ergibt sich eine Begrenzung der Druckschwellfestigkeit der Kraftstoffeinspritzdüse. Es wurde festgestellt, dass insbesondere der Mündungsbereich der spitzwinkelig zur Führungsbohrung verlaufenden Zugangsbohrung gefährdet ist. In diesem sogenannten Spickelbereich konzentrieren sich besonders hohe Spannungen im Betrieb der Kraftstoffeinspritzdüse.

Es ist daher die Aufgabe der vorliegenden Erfmdung, ein Abplatzrisiko der Verbindungsschicht im kritischen Spickelbereich zwischen Zulaufbohrung und Führungsbohrung eines Düsenkörpers mit einfachen, serienfertigungstauglichen Mitteln zu minimieren.

Die Aufgabe wird ausgehend von einem Verfahren gemäß dem Oberbegriff von Anspruch 1 in Verbindung mit dessen kennzeichnenden Merkmalen gelöst. Im Hinblick auf eine korrespondierende Vorrichtung wird die Aufgabe durch Anspruch 5 gelöst. Anspruch 8 gibt ein erfindungsgemäß modifiziertes Kraftstoffeinspritzventil an. Die jeweils rückbezogenen abhängigen Ansprüche nennen vorteilhafte Weiterbildungen der Erfindung.

Die Erfindung schließt die verfahrenstechnische Lehre ein, dass als weiterer Bearbeitungsschritt des Düsenkörpers eine im Bereich des distalen Endes isolierte Stabelektrode in die Zulaufbohrung eingeführt wird und eine Elektrolytlösung durch einen von der Führungsbohrung und der Zulaufbohrung gebildeten Kanal gepumpt wird, um durch eine nachfolgende Bestromung der Stabelektrode einen gezielten elektrochemischen Abtrag der beim Nitrieren erzeugten oberflächlichen Verbindungsschicht im Mündungsbereich der Zulaufbohrung zur Führungsbohrung zu realisieren.

Der Vorteil der erfindungsgemäßen Methode liegt insbesondere darin, dass ein Materialabtrag nur an der speziellen Stelle erfolgt, welche im Hinblick auf das Abplatzen der Verbindungsschicht kritisch ist. Durch diesen örtlich gezielten Materialabtrag kann dieser weitere Bearbeitungsschritt zügig durchgeführt werden. Denn es ist nicht erforderlich, die gesamte Oberfläche des Düsenkörpers derart elektrochemisch zu behandeln. Der erfindungsgegenständliche örtlich gezielte Materialabtrag ist nur dadurch möglich, dass eine Elektrode in Form einer Stabelektrode mit aktiver Spitze zum Einsatz gebracht wird. Hiermit ist es möglich trotz der beengten Platzverhältnisse im Inneren des Düsenkörpers den örtlich gezielten Materialabtrag auszuführen. Hierbei wird die zum Materialabtrag weiterhin erforderliche Elektrolytlösung auf spezielle Weise durch das Innere des Düsenkörpers geleitet. Diese zirkuliert nämlich durch die Führungsbohrung und die Zulaufbohrung. Ein nach dem erfindungsgemäßen Verfahren bearbeiteter Düsenkörper weist gegenüber dem Stand der Technik eine deutlich erhöhte Druckschwellenfestigkeit auf, was bereits durch hydraulische Pulsversuche nachgewiesen worden ist.

Vorzugsweise erfolgt der örtlich gezielte elektrochemische Abtrag der Verbindungsschicht durch eine ECM-Bearbeitung. Dieses spezielle elektrochemische Bearbeitungsverfahren eignet sich ganz besonders für den erfindungsgemäßen Einsatzweck, da hiermit eine effiziente Bearbeitung im Hinblick auf die Bearbeitungszeit sowie das Bearbeitungsresultat sichergestellt werden kann. Die ECM-Bearbeitung funktioniert nach dem Prinzip des galvanischen Abtrags. Das Werkstück wird anodisch, das Werkzeug - hier Stabelektrode - kathodisch kontaktiert. Durch den Arbeitsspalt zwischen Werkstück und Werkzeug wird die Elektrolytlösung gepumpt. Beim Anlegen einer elektrischen Spannung fließt Strom, so dass durch die hierdurch ausgelöste Elektrolyse Metall-Ionen aus der Oberfläche des Werkstücks gelöst werden. Es erfolgt ein definierter Abtrag.

Gemäß einer weiteren, die Erfindung verbessernden Maßnahme wird die Elektrolytlösung über die Führungsbohrung zugeführt und über die Zulaufbohrung abgeführt. Mit der hierdurch definierten Fließrichtung kann ein ungehindertes Abfließen der die abgetragenen Partikel enthaltenen Elektrolytlösung sichergestellt werden. Hinderliche Drosselstellen werden so vermieden.

Ferner sollte die erfindungsgemäß ausgebildete Stabelektrode koaxial in die Zulaufbohrung eingeführt werden. Hierdurch wird ein genügend großer Abstand zur Wandung der Zulaufbohrung erzielt, welcher eine Voraussetzung für ein optimales Funktionieren der erfindungsgemäßen Lösung ist.

Die Stabelektrode besteht vorzugsweise aus einem Metallstab, der teilweise von einem im Wesentlichen dreikantig geformten Isoliermaterial umgeben ist, um die koaxiale Zentrierung innerhalb der Zulaufbohrung zu erzielen. Gleichzeitig bleibt durch das Zusammenwirken des dreikantig geformten Isolatormantels mit der im Querschnitt runden Zulaufbohrung noch ausreichend Raum zur Abführung der Elektrolytlösung. Hierfür stehen dann genau drei zwischen Zulaufbohrung und Isoliermantel angeordnete Kanalabschnitte zur Verfügung.

Der Isoliermantel lässt gemäß einer die Erfindung verbessernden Maßnahme das distale Ende des Metallstabes in einem Bereich von mindestens 2,5 mm frei. Bei Unterschreiten dieses Maßes ist ein ausreichender Materialabtrag der Verbindungsschicht im kritischen Spickelbereich nicht unter allen Umständen gewährleistbar. Daher stellt der genannte Maßbereich im Hinblick hierauf ein Optimum dar.

Das erfindungsgemäße Verfahren wird vorzugsweise mit einer Vorrichtung zur Bearbeitung des Düsenkörpers ausgeführt, welche über eine Aufnahmeeinheit zum Einspannen des nitrierten Düsenkörpers verfügt. Die Aufnahmeeinheit besitzt des Weiteren die im Bereich des distalen Endes isolierte Stabelektrode sowie Mittel zum Pumpen der Elektrolytlösung durch den Düsenkörper, um durch Bestromung der Stabelektrode den gewünschten elektrochemischen Abtrag der beim Nitrieren der erzeugten oberflächlichen Verbindungsschicht im Mündungsbereich der Zulaufbohrung zur Führungsbohrung zu realisieren.

Die Aufnahmeeinheit für den Düsenkörper kann direkt mit einem Anschluss sowie internen Kanälen zur Zuführung der Elektrolytlösung in die Führungsbohrung des Düsenkörpers ausgestattet sein. Zum Einspannen von Düsenkörpern unterschiedlicher Bauart an die Aufnahmeeinheit im Rahmen einer automatisierten Fertigung kann eine Adaptereinheit zwischengeschaltet sein, welche die unterschiedlichen Anschlussgeometrien verkörpert.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: einen teilweise Längsschnitt durch ein Kraftstoffeinspritzventil,
- Fig.2: ein schematischer Längsschnitt durch eine Vorrichtung zur Bearbeitung des Düsenkörpers des Einspritzventits nach Fig.1,
- Fig.3: eine Detailvergrößerung des in Fig.2 dargestellten Düsenkörpers im Mündungsbereich zwischen Zulaufbohrung und Führungsbohrung, und
- Fig.4: einen Querschnitt durch die Stabelektrode aus Fig.3.

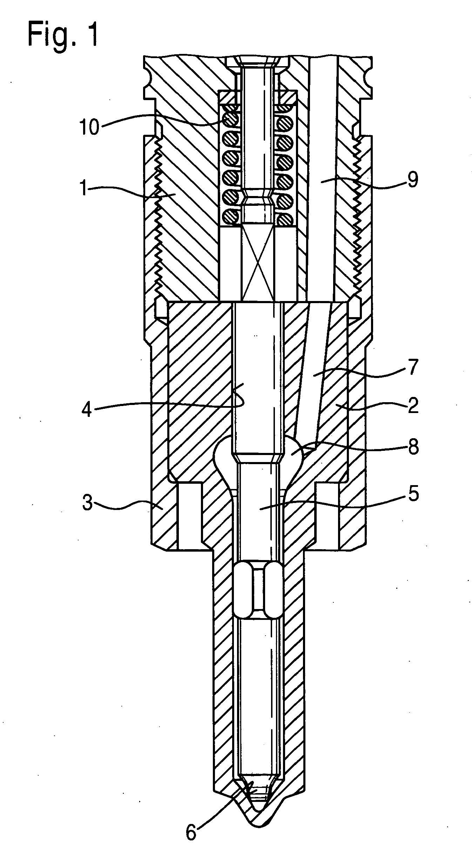

Gemäß Fig.1 besteht ein Kraftstoffeinspritzventil für eine Brennkraftmaschine im Wesentlichen aus einem - hier nur teilweise dargestellten - oberen Düsenhalter 1, an welchem koaxial stirnseitig ein Düsenkörper 2 angebracht ist. Die Anbringung des Düsenkörpers 2 am Düsenhalter 1 erfolgt über eine Spannmutter 3. Der Düsenkörper 2 besitzt eine koaxiale Führungsbohrung 4, welche der Führung einer hierin hin- und her beweglichen Düsennadel 5 dient. Die Düsennadel 5 betätigt mit dem distalen Ende einen Ventilsitz 6, worüber Kraftstoff in den Brennraum der Brennkraftmaschine gelangt. Der Kraftstoff wird über eine im Düsenkörper 2 benachbart zur Führungsbohrung 4 ausgebildete Zulaufbohrung 7 in einen als Druckkammer 8 ausgeformten Raum der Führungsbohrung 4 geleitet. Von hier aus gelangt der Kraftstoff zwischen der Wandung der Führungsbohrung 4 und der Düsennadel 5 vorbei bis an den Ventilsitz 6. Die Zulaufbohrung 7 wird gespeist von einer hiermit gekoppelten und im Düsenhalter 1 ausgebildeten oberen Zulaufbohrung 9. Die axiale Bewegung der Düsennadel 5 erfolgt in an sich bekannter Weise über hier nicht weiter dargestellte elektromagnetische Mittel. Im unbestromten Zustand der elektromagnetischen Mittel wird die Düsennadel 5 über eine Feder 10 gegen den Ventilsitz 6 gedrückt, so dass das Kraftstoffeinspritzventil in Ruhestellung schließt.

Der Düsenkörper 2 des Kraftstoffeinspritzventils ist aus Stahl gefertigt und wird durch Nitrieren gehärtet. Insbesondere im Mündungsbereich der Zulaufbohrung 7 in die Führungsbohrung 4 kann es im Betrieb aufgrund von druckbedingten Spannungen zu einem ungewollten Abplatzen der durch das Nitrieren erzeugten oberflächlichen Verbindungsschicht kommen.

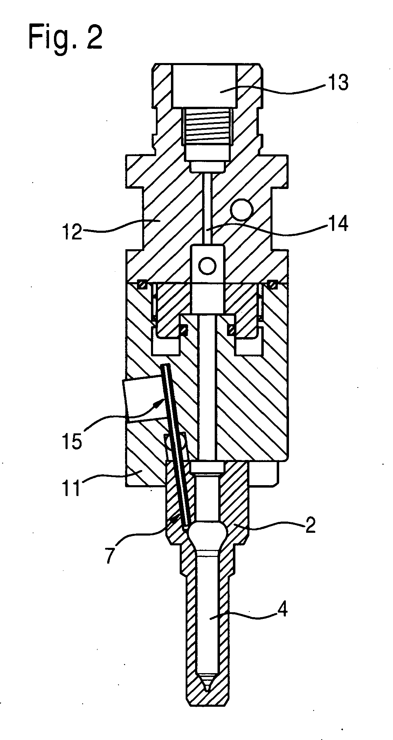

Um dieses zu verhindern, wird gemäß Fig.2 der Düsenkörper 2 durch die hier dargestellte Vorrichtung örtlich gezielt bearbeitet, wozu der Düsenkörper 2 über eine an dessen geometrischer Abmessungen angepasste Adaptereinheit 11 an einer Aufnahmeeinheit 12 eingespannt ist. Die Aufnahmeeinheit 12 weist einen Anschluss 13 sowie einen hiervon abgehenden inneren Kanal 14 zur Zuführung einer Elektrolytlösung in die Führungsbohrung 4 des nitrierten Düsenkörper 12 auf. Die Aufnahmeeinheit 12 mit Adaptereinheit 11 besitzt weiterhin eine im Bereich des distalen Endes abisolierte Stabelektrode 15, welche in die Zulaufbohrung 7 des Düsenkörpers 2 eingeführt ist. Über eine - nicht weiter dargestellte - Pumpe wird die Elektrolytlösung ausgehend vom Anschluss 13 über den inneren Kanal 14, der Führungsbohrung 4 über die Zulaufbohrung 7 geleitet und verlässt anschließend die Vorrichtung. Gleichzeitig erfolgt durch Bestromung der Stabelektrode 15 ein gezielter elektrochemischer Abtrag, der beim Nitrieren erzeugten oberflächlichen Verbindungsschicht im Mündungsbereich der Zulaufbohrung 7 zu der Führungsbohrung 4.

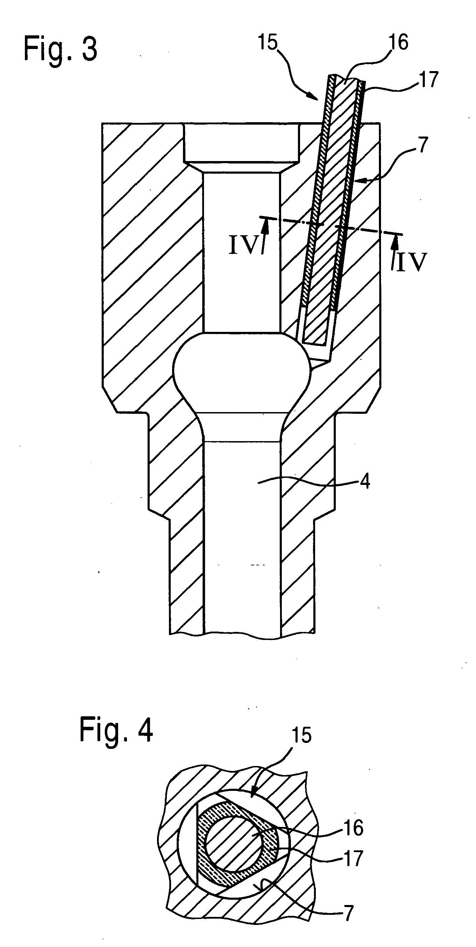

Aus der Detailvergrößerung gemäß Fig.3 ist ersichtlich, dass die Stabelektrode 15 einen inneren Metallstab 16 umfasst, der von einem Isolatormantel 17 umgeben ist. Der Isolatormantel 17 lässt das Ende der Stabelektrode 15 im Bereich von hier 2,5 mm frei, so dass an dieser Stelle der blanke Metallstab 16 frei liegt. Um den Bereich des freiliegenden Metallstabes 16 herum wirkt die Stabelektrode 15 materialabtragend. Bei dem Bereich handelt es sich um den Mündungsbereich der Zulaufbohrung 7 zur Führungsbohrung 4, also insbesondere der Spickelbereich.

Um die im Querschnitt in Fig.5 gezeigte Stabelektrode 15 koaxial in die Zulaufbohrung 7 einzuführen, ist der Querschnitt der Stabelektrode 15 im Wesentlichen dreikantig geformt. Durch die dreikantige Formgebung, welche durch den Isoliermantel 17 der Stabelektrode 15 bewirkt wird, kann die Elektrolytlösung an der Stabelektrode 15 vorbeifließen.

## Patentansprüche

1. Verfahren zur Bearbeitung eines Düsenkörpers (2) für ein Kraftstoffeinspritzventil mit einer Zulaufbohrung (7) für Kraftstoff, die in eine Führungsbohrung (4) für eine Düsennadel (5) einmündet, wobei der spanend bearbeitete Düsenkörper (2) nachfolgend durch Nitrieren gehärtet wird,
**dadurch gekennzeichnet, dass** als weiterer Bearbeitungsschritt eine im Bereich des distalen Endes isolierte Stabelektrode (15) in die Zulaufbohrung (7) eingeführt wird und eine Elektrolytlösung durch einen von der Führungsbohrung (4) und der Zulaufbohrung (7) gebildeten Kanal gepumpt wird, um durch nachfolgende Bestromung der Stabelektrode (15) einen gezielten elektrochemischen Abtrag der beim Nitrieren erzeugten oberflächlichen Verbindungsschicht im Mündungsbereich der Zulaufbohrung (7) zur Führungsbohrung (4) zu realisieren.

2. Verfahren nach Anspruch 1, **dadurch gekennzeichnet, dass** der elektrochemische Abtrag der Verbindungsschicht durch eine ECM-Bearbeitung durchgeführt wird.

3. Verfahren nach Anspruch 1 oder 2, **dadurch gekennzeichnet, dass** die Elektrolytlösung über die Führungsbohrung (4) zugeführt wird und über die Zulaufbohrung (7) abgeführt wird, um ein ungehindertes Abfließen zu gewährleisten.

4. Verfahren nach einem der vorstehenden Ansprüche, **dadurch gekennzeichnet, dass** die Stabelektrode (15) koaxial in die Zulaufbohrung (7) eingeführt wird.

5. Vorrichtung zur Bearbeitung eines Düsenkörpers (2) für ein Kraftstoffeinspritzventil mit einer Zulaufbohrung (7) für Kraftstoff, die in eine Führungsbohrung (4) für eine Düsennadel (5) einmündet, mit einer Aufnahmeeinheit (12) zum Einspannes des nitrierten Düsenkörpers (2), wobei die Aufnahmeeinheit (12) mit einer im Bereich des distalen Endes isolierten Stabelektrode (15) zur Einführung in die Zulaufbohrung (7) sowie mit Mitteln zum Pumpen einer Elektrolytlösung durch einen von der Führungsbohrung (4) und der Zulaufbohrung (7) gebildeten Kanal ausgerüstet ist, um durch Bestromung der Stabelektrode (15) einen gezielten elektrochemischen Abtrag der beim Nitrieren erzeugten oberflächlichen Verbindungsschicht im Mündungsbereich der Zulaufbohrung (7) zur Führungsbohrung (4) zu realisieren,
**dadurch gekennzeichnet, dass** die Stabelektrode (15) einen Metallstab (16) umfasst, der teilweise von einem im wesentlichen dreikantig geformten Isolatormantel (17) umgeben ist, um eine koaxiale Zentrierung innerhalb der Zulaufbohrung (7) zu erzielen.

6. Vorrichtung nach Anspruch 5, **dadurch gekennzeichnet, dass** die Aufnahmeeinheit (12) mit einem Anschluss (13) zur Zuführung der Elektrolytlösung in die Führungsbohrung (4) ausgestattet ist.

7. Vorrichtung nach Anspruch 5, **dadurch gekennzeichnet, dass** der Isoliermantel (17) das distalen Ende des Metallstabes (16) in einem Bereich von mindestens 2,5 mm freilässt.

8. Kraftstoffeinspritzventil für eine Brennkraftmaschine, umfassend einen nitrierten Düsenkörper (2) mit einer Zulaufbohrung (7) für Kraftstoff, die nach einem Verfahren gemäß eines der Ansprüche 1 bis 4 bearbeitet ist, wobei die durch Nitrieren erzeugte oberflächliche Verbindungsschicht im Mündungsbereich der Zulaufbohrung (7) zur Führungsbohrung (4) zumindest teilweise elektrochemisch abgetragen ist.

9. Kraftstoffeinspritzventil nach Anspruch 8, **dadurch gekennzeichnet, dass** die Zulaufbohrung (7) spitzwinklig in die Führungsbohrung (4) einmündet.

## Claims

1. Method for processing a nozzle body (2) for a fuel injection valve having a fuel inlet bore (7) which issues into a guide bore (4) for a nozzle needle (5), wherein the nozzle body (2) processed by cutting is then hardened by nitriding,
**characterized in that**, as a further processing step, a rod electrode (15) insulated in the region of the distal end is inserted into the inlet bore (7) and an electrolyte solution is pumped through a channel formed by the guide bore (4) and the inlet bore (7) in order to realize, by subsequently supplying current to the rod electrode (15), targeted electrochemical removal of material from the superficial connection layer produced during nitriding in the region in which the inlet bore (7) issues into the guide bore (4).

2. Method according to Claim 1, **characterized in that** the electrochemical removal of material from the connection layer is carried out by ECM machining.

3. Method according to Claim 1 or 2, **characterized in that** the electrolyte solution is supplied via the guide bore (4) and is carried away via the inlet bore (7) in order to ensure unhindered flow off.

4. Method according to one of the preceding claims,
**characterized in that** the rod electrode (15) is inserted coaxially into the inlet bore (7).

5. Apparatus for processing a nozzle body (2) for a fuel injection valve having a fuel inlet bore (7) which issues into a guide bore (4) for a nozzle needle (5), having a receiving unit (12) for clamping the nitrided nozzle body (2), wherein the receiving unit (12) is equipped with a rod electrode (15) insulated in the region of the distal end for insertion into the inlet bore (7), and also with means for pumping an electrolyte solution through a channel formed by the guide bore (4) and the inlet bore (7), in order to realize, by supplying current to the rod electrode (15), targeted electrochemical removal of material from the superficial connection layer produced during nitriding in the region in which the inlet bore (7) issues into the guide bore (4),
**characterized in that** the rod electrode (15) comprises a metal rod (16), which is surrounded partially by an insulator sheath (17) of a substantially triangular shape in order to achieve coaxial centring within the inlet bore (7).

6. Apparatus according to Claim 5, **characterized in that** the receiving unit (12) is equipped with a port (13) for supplying the electrolyte solution into the guide bore (4).

7. Apparatus according to Claim 5, **characterized in that** the insulator sheath (17) leaves the distal end of the metal rod (16) free in a region of at least 2.5 mm.

8. Fuel injection valve for an internal combustion engine, comprising a nitrided nozzle body (2) having a fuel inlet bore (7) which is processed by a method according to one of Claims 1 to 4, wherein material is electrochemically removed from at least parts of the superficial connection layer produced by nitriding in the region in which the inlet bore (7) issues into the guide bore (4).

9. Fuel injection valve according to Claim 8,
**characterized in that** the inlet bore (7) issues into the guide bore (4) at an acute angle.

## Revendications

1. Procédé d'usinage d'un corps de tuyère (2) pour soupape d'injection de carburant, le corps de tuyère présentant un alésage (7) d'amenée de carburant qui débouche dans un alésage (4) de guidage d'un pointeau (5) de tuyère, le corps de tuyère (2) usiné par enlèvement de matière étant ensuite durci par nitruration,
**caractérisé en ce que**
dans une autre étape de traitement, une électrode (15) en barreau isolée au niveau de son extrémité distale est insérée dans l'alésage d'amenée (7) et une solution d'électrolyte est pompée dans le canal formé par l'alésage de guidage (4) et l'alésage d'amenée (7) pour, après avoir alimenté l'électrode (15) en barreau en courant, obtenir un enlèvement électrochimique contrôlé de la couche superficielle de liaison formée lors de la nitruration au niveau de l'embouchure de l'alésage d'amenée (7) dans l'alésage de guidage (4).

2. Procédé selon la revendication 1, **caractérisé en ce qu'**un enlèvement électrochimique de la couche de liaison est réalisé par un traitement ECM.

3. Procédé selon les revendications 1 ou 2, **caractérisé en ce que** la solution d'électrolyte est apportée par l'intermédiaire de l'alésage de guidage (4) et est enlevée par l'alésage d'amenée (7) pour garantir son écoulement sans obstacle.

4. Procédé selon l'une des revendications précédentes, **caractérisé en ce que** l'électrode (15) en barreau est insérée coaxialement dans l'alésage d'amenée (7).

5. Dispositif de traitement d'un corps de tuyère (2) pour soupape d'injection de carburant qui présente un alésage (7) d'amenée de carburant qui débouche dans un alésage (4) de guidage d'un pointeau de tuyère (5),
le dispositif présentant une unité de réception (12) dans laquelle est serré le corps de tuyère (2) nitruré,
l'unité de reprise (12) étant équipée d'une électrode (15) en barreau isolée au niveau de son extrémité distale et destinée à être insérée dans l'alésage d'amenée (7), ainsi que de moyens de pompage d'une solution d'électrolyte dans le canal formé par l'alésage de guidage (4) et l'alésage d'amenée (7) pour, en alimentant en courant l'électrode (15) en barreau, obtenir un enlèvement électrochimique contrôlé de la couche superficielle de liaison formée lors de la nitruration au niveau de l'embouchure de l'alésage d'amenée (7) dans l'alésage de guidage (4),
**caractérisé en ce que**
l'électrode (15) en barreau présente un barreau métallique (16) entouré en partie par une enveloppe isolante (17) de forme essentiellement triangulaire qui permet de la centrer coaxialement dans l'alésage d'amenée (7).

6. Dispositif selon la revendication 5, **caractérisé en ce que** l'unité de réception (12) présente un raccordement (13) qui permet d'amener la solution d'électrolyte dans l'alésage de guidage (4).

7. Dispositif selon la revendication 5, **caractérisé en ce que** l'enveloppe isolante (17) laisse libre l'extrémité distale du barreau métallique (16) sur au moins 2,5 mm.

8. Soupape d'injection de carburant pour moteur à combustion interne, comprenant un corps de tuyère (2) nitruré doté d'un alésage (7) d'amenée de carburant et qui a été traité par un procédé selon l'une des revendications 1 à 4, la couche superficielle de liaison formée lors de la nitruration étant enlevée au moins en partie par voie électrochimique au niveau de l'embouchure de l'alésage d'amenée (7) dans l'alésage de guidage (4).

9. Soupape d'injection de carburant selon la revendication 8, **caractérisée en ce que** l'alésage d'amenée (7) débouche à angle aigu dans l'alésage d'amenée (4).
